# EUROPÄISCHE PATENTANMELDUNG

(11) **EP 1 914 096 A1**
(43) Veröffentlichungstag der Anmeldung: **23.04.2008**
(21) Anmeldenummer: 07019978.1
(22) Anmeldetag: 12.10.2007
(51) Int. Cl.: B60J 5/04, B60R 19/04, B60R 19/18

(54) **Aufprallquerträger für eine Kraftfahrzeugkarosserie**

(30) Priorität: 16.10.2006 DE 202006016034 U
(71) Anmelder: Wagon Automotive GmbH, 63857 Waldaschaff (DE)
(72) Erfinder: Diehm, Jürgen, Dipl.-Ing., 97877 Wertheim (DE); Behre, Rüdiger, Dipl.-Ing., 63322 Rödermark (DE)
(74) Vertreter: Gesthuysen, von Rohr & Eggert

(57) **Zusammenfassung**

Gegenstand der Erfindung ist ein Aufprallquerträger für eine Kraftfahrzeugkarosserie, insbesondere Stoßfängerquerträger oder Seitenaufprallschutz, in Form eines langgestreckten, durchlaufenden, vorzugsweise leicht gebogen verlaufenden Hohlprofils (1), das eine Längsrichtung definiert. Dieser zeichnet sich durch eine besonders flexible Herstellungstechnik aus. Das wird dadurch erreicht, daß das Hohlprofil (1) aus zwei sich in Längsrichtung erstreckenden Teilprofilen (1a,b) besteht, die aufeinanderzu gerichtet miteinander zusammengefügt und fest miteinander verbunden sind, wobei eines des Teilprofile (1b) im Querschnitt im wesentlichen U-förmig und das andere Teilprofil (1a) U-förmig oder geschlossen ausgeführt ist, wobei die die Abmessungen quer zur Längsrichtung, also in Querrichtung, also die Breite (B) des Hohlprofils (1) definierenden Flächen (5, 6) von den Teilprofilen (1a; 1b) gebildet sind.

## Beschreibung

Die Erfindung betrifft einen Aufprallquerträger für eine Kraftfahrzeugkarosserie mit den Merkmalen des Oberbegriffs von Anspruch 1.

Aufprallquerträger für eine Kraftfahrzeugkarosserie kennt man zunächst als Stoßfängerquerträger (Stoßstangen), die heutzutage meist in die Karosserie des Kraftfahrzeugs integriert sind. Beispielhaft wird auf die US-A-5,803,514 und die WO-A-2006/000074 verwiesen.

Ein anderes Beispiel für einen Aufprallträger einer Kraftfahrzeugkarosserie ist der Seitenaufprallschutz in der Seitentür der Kraftfahrzeugkarosserie. Hierzu wird beispielhaft verwiesen auf die US-A-5,080,427.

Grundsätzlich kennt man Aufprallquerträger auch an anderer Stelle in der Kraftfahrzeugkarosserie beispielsweise als Instrumententafelträger (Cockpitträger).

Die zuvor angesprochene Literatur zu Stoßfängerquerträgern zeigt, daß diese entweder über die gesamte Länge (die Breitenrichtung der Kraftfahrzeugkarosserie selbst) ein und dieselbe Breite in Querrichtung (in Längsrichtung bezüglich der Kraftfahrzeugkarosserie) oder im mittleren Abschnitt eine größere Breite als in den endseitigen Abschnitten aufweisen. Hier und nachfolgend werden die Begriffe Längsrichtung und Querrichtung bzw. Breite auf den Aufprallquerträger selbst bezogen, nicht auf die Kraftfahrzeugkarosserie, an der er angebaut ist, jedoch in seiner Raumlage, die er bei Anbau an die Kraftfahrzeugkarosserie einnimmt. Längsrichtung bedeutet daher die Y-Richtung, die Breitenrichtung, bezüglich der Kraftfahrzeugkarosserie. Querrichtung bedeutet die X-Richtung, die Längsrichtung bzgl. der Kraftfahrzeugkarosserie, und Höhenrichtung bedeutet die Z-Richtung, die Höhenrichtung bezüglich der Kraftfahrzeugkarosserie.

Bei dem zuvor erläuterten Stand der Technik für Stoßfängerquerträger geht man davon aus, daß bei einem Stoßfängerquerträger im mittleren Abschnitt ein besonders hohes Widerstandsmoment erreicht werden sollte, so daß im mittleren Abschnitt auch der größte Querschnitt in Querrichtung des Hohlprofils vorliegen sollte. Das ist der für einen Frontalaufprall des Kraftfahrzeugs entscheidende Querschnitt des Hohlprofils.

Demgegenüber ist das Hohlprofil eines klassischen Stoßfängerquerträgers zu den Enden hin häufig in Querrichtung schmaler. Die WO-A-2006/000074 zeigt dabei eine Version, bei der die beiden die Breite definierenden Flächen des Hohlprofils einen kontinuierlichen Verlauf haben. Die innere Fläche hat einen weniger stark bogenförmigen Verlauf als die äußere Fläche, so daß sich im mittleren Abschnitt des Hohlprofils zwanglos der größte Querschnitt in Querrichtung, also die größte Breite des Hohlprofils ergibt.

Bekannt ist auch die Ausführung von Aufprallquerträgern, insbesondere Stoßfängerquerträgern, in Form langgestreckter Hohlprofile dergestalt, daß im mittleren Abschnitt eine geringere Breite als in den endseitigen Abschnitten vorliegt (DE-A-101 22 712; US-B-6,349,521). Mit der dortigen Anordnung gewinnt man im mittleren Abschnitt einen erheblichen Vorteil dadurch, daß hier mehr Abstand in X-Richtung der Kraftfahrzeugkarosserie zwischen der inneren Fläche des Hohlprofils und beispielsweise einem in der Mitte befindlichen Kühler des Kraftfahrzeugmotors geschaffen wird. Durch die erfindungsgemäße Lösung wird für den erfindungsgemäßen Stoßfängerquerträger im mittleren Abschnitt einfach mehr Verformungsweg in X-Richtung bereitgestellt, so daß teure Schäden am Kühler qualitativ gesehen seltener auftreten werden.

Den zuvor erläuterten, bekannten Aufprallträgern, insbesondere ausgeführt als Stoßlängerquerträger, ist gemeinsam, daß das Hohlprofil, insbesondere wenn es aus Stahl oder Aluminium besteht, einstückig und geschlossen ist. Ggf. sind Anbauteile angeschweißt. Die Herstellung solcher Hohlprofile ist aufwendig. Sie verlangt eine Vielzahl unterschiedlicher Verfahrensschritte.

Der Lehre liegt das Problem zugrunde, einen Aufprallquerträger der in Rede stehenden Art so zu optimieren, daß die Abmessungen in Querrichtung über die Länge des Aufprallquerträgers möglichst einfach bedarfsgerecht gewählt werden können.

Das zuvor aufgezeigte Problem ist bei dem erfindungsgemäßen Aufprallquerträger dadurch gelöst, daß das Hohlprofil aus zwei sich in Längsrichtung erstreckenden Teilprofilen besteht, die aufeinanderzu gerichtet miteinander zusammengefügt und fest miteinander verbunden sind, wobei eines des Teilprofile im Querschnitt im wesentlichen U-förmig und das andere Teilprofil U-förmig oder geschlossen ausgeführt ist, wobei die die Abmessungen quer zur Längsrichtung, also in Querrichtung, also die Breite des Hohlprofils definierenden Flächen von den Teilprofilen gebildet sind.

Dadurch, daß man das Hohlprofil aus zwei Teilprofilen zusammensetzt, kann man das jeweilige Teilprofil so formen wie es am Ende für den Aufprallquerträger insgesamt optimal ist.

Insbesondere kann man vorsehen, daß die Breite des letztendlich resultierenden Hohlprofils im mittleren Abschnitt anders, vorzugsweise geringer ist als in den endseitigen Abschnitten, wobei man das einfach dadurch erreicht, daß die die Breite des Hohlprofils definierenden, von den Stegen der Teilprofile gebildeten Flächen einen unterschiedlichen bogenförmigen Verlauf aufweisen. Letzteres ist insbesondere dann herstellungstechnisch besonders gut umsetzbar, wenn ein Teilprofil bzw. jedes Teilprofil als Rollprofil oder Walzprofil aus Metall-Flachbandmaterial ausgeführt ist. Insbesondere ultra-hochfestes Stahlblech kommt hier als Material in Frage. Die Verbindungstechnik ist bevorzugt ein Schweißen, und zwar an den Schenkeln der miteinander zusammengesetzten U-förmigen Teilprofile.

Bevorzugte Ausgestaltungen und Weiterbildungen sind Gegenstand der Unteransprüche.

Besonders bevorzugt ist die Lehre der Erfindung bei einem Aufprallquerträger, der als Stoßfängerquerträger ausgeführt ist.

Vorteile und Besonderheiten dieser Lehre ergeben sich aus der nachfolgenden Beschreibung eines bevorzugten Ausführungsbeispiels der Erfindung anhand der Zeichnung,

In der Zeichnung zeigt
- Fig. 1: in perspektivischer und stark schematisierter Ansicht einen Aufprallquerträger des Standes der Technik in Form eines Stoßfängerquerträgers, und zwar zum einen ohne Aufpralldämpfer, zum anderen mit Aufpralldämpfern dargestellt,
- Fig. 2: eine Ausführungsform eines Aufprallquerträgers gemäß Fig. 1, realisiert mit zwei Teilprofilen gemäß der Lehre der Erfindung,
- Fig. 3: eine zweite Variante des Aufprallquerträgers gemäß Fig. 2,
- Fig. 4: eine dritte Variante des Aufprallquerträgers gemäß Fig. 2.

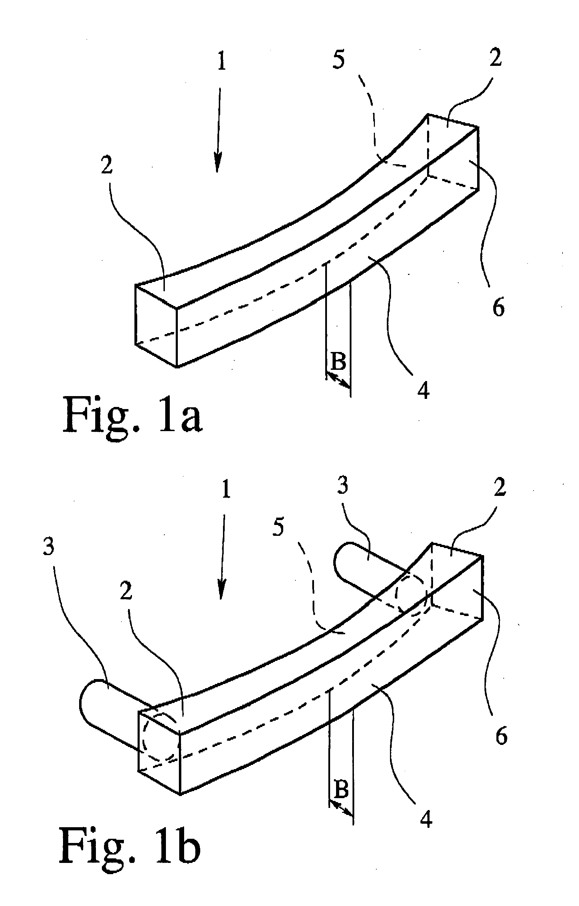

Fig. 1 zeigt im Bild a) einen Aufprallquerträger, der ein Stoßfängerquerträger sein kann, ohne Aufpralldämpfer, in Bild b) einen solchen mit Aufpralldämpfern. Fig. 1 zeigt den Stand der Technik.

Für die Funktion und Position von Aufprallquerträgern der in Rede stehenden Art in einer Kraftfahrzeugkarosserie, insbesondere von Stoßfängerquerträgern und Trägem als Seitenaufprallschutz, darf auf den eingangs im allgemeinen Teil der Beschreibung angesprochenen Stand der Technik verwiesen werden.

Weiter darf auf die Erläuterungen im allgemeinen Teil der Beschreibung verwiesen werden insoweit als die Termini "Längsrichtung, Querrichtung, Höhenrichtung" für den Aufprallquerträger einerseits und die Kraftfahrzeugkarosserie andererseits betroffen sind.

Der in Fig. 1 in seiner grundsätzlichen Anordnung rein schematisch dargestellte Aufprallquerträger ist hier als Stoßfängerquerträger ausgeführt. Ein solcher Stoßfängerquerträger findet sich vom und hinten quer zur Längserstrekkung der Kraftfahrzeugkarosserie verlaufend an dieser.

Der dargestellte Aufprallquerträger ist ausgeführt als Stoßfängerquerträger in Form eines langgestreckten, hier leicht gebogen verlaufenden Hohlprofils 1. Der leicht bogenförmige Verlauf der dem Verlauf der Kraftfahrzeugkarosserie an dieser Stelle zu folgen hat, wird auch als Strak des Stoßfangerquerträgers bezeichnet. Im Rahmen dieser Ausrichtung des Aufprallquerträgers ist durch dessen langgestreckte Form eine Längsrichtung definiert. Diese kann man durch die Längsmittelachse des Hohlprofils definieren oder durch einen anderen Verlauf der Längsachse. Jedenfalls ist bei einem leicht gebogen verlaufenden Hohlprofil diese Längsrichtung nicht im Sinne einer geraden Ausrichtung, sondern entsprechend bogenförmig verlaufend zu verstehen.

Das Hohlprofil 1 läuft vom einen zum anderen Ende des Stoßfängerquerträgers durch. Es ist also nicht zwischenzeitlich unterbrochen oder aus mehreren Stücken zusammengesetzt. Wenn dem so wäre, könnte man die gewünschten unterschiedlichen Abmessungen ja durch Einbau unterschiedlicher Stücke erreichen. Das geht aber bei diesem durchlaufenden Hohlprofil 1 nicht. In endseitigen Abschnitten 2 ist dieses Hohlprofil 1 zur Anbringung an sich im wesentlichen quer zur Längsrichtung erstreckenden Aufpralldämpfern 3 bestimmt und geeignet, Diese Aufpralldämpfer 3, in der Praxis häufig auch als Crashboxen bezeichnet, sieht man in Fig. 1b). Mittels der Aufpralldämpfer 3 ist das Hohlprofil 1 des Stoßfängerquerträgers an Längsträgern der Kraftfahrzeugkarosserie ansetzbar und befindet sich so in der richtigen Position relativ zum Chassis der Kraftfahrzeugkarosserie.

Querrichtung in diesem Sinne meint ebenfalls wieder nicht genau die rechtwinklige Ausrichtung zur Längsrichtung, sondern eine mehr oder weniger quer dazu verlaufende Ausrichtung. Regelmäßig werden die Aufpralldämpfer 3 sich in X-Richtung, das ist die Längsrichtung hinsichtlich der Kraftfahrzeugkarosserie, erstrecken, während das Hohlprofil 1 im Bereich der Aufpralldämpfer 3 nicht genau rechtwinklig dazu, sondern leicht geneigt dazu verläuft.

Der Anbindungsbereich der Aufpralldämpfer 3 am Hohlprofil 1 in den endseitigen Abschnitten 2 bedarf besonderer Beachtung, wozu auf den eingangs angesprochenen Stand der Technik nochmals ausführlich Bezug genommen werden darf. Interessante Ausführungen findet man dazu auch in der EP-A-1 533 192, die ebenfalls als relevanter Stand der Technik genannt wird.

Wie bereits im allgemeinen Teil der Beschreibung erläutert worden ist, ist hier vorgesehen, daß die Breite B des Hohlprofils 1 im mittleren Abschnitt 4 geringer ist als in den endseitigen Abschnitten 2. Das hat die im allgemeinen Teil der Beschreibung erläuterten Vorteile hinsichtlich des Verformungsweges im crashempfindlichen mittleren Abschnitt 4. Dort, wo die Aufpralldämpfer 3 am Hohlprofil 1 in den endseitigen Abschnitten 2 angreifen, ist das Hohlprofil 1 besonders steif, hat also ein besonders hohes Widerstandsmoment. Bei großflächiger Verbindung an dieser Stelle wirken die Anbringungsbereiche nicht wie im Stand der Technik einfach scharnierartig, sondern sie sind steif und zwingen den mittleren Abschnitt 4 des Hohlprofils 1 zu einer erheblich weitergehenden Verformung als bei bekannten Aufprallquerträgern. Das geringere Widerstandsmoment des Hohlprofils 1 im mittleren Abschnitt 4 wird überkompensiert, weil der außenliegende Druckgurt und der innenliegende Zuggurt wirkungsvoller sind.

Bevorzugt kann man vorsehen, daß die Breite B des Hohlprofils 1 im mittleren Abschnitt 4 um etwa 10 % bis etwa 30 % geringer ist als in den endseitigen Abschnitten 2.

Von besonderem Vorteil ist es, wenn sich über die Länge des Hohlprofils 1 keine starken Querschnittssprünge ergeben. Vielmehr empfiehlt es sich, daß die beiden die Breite B definierenden Flächen 5, 6 des Hohlprofils 1 einen kontinuierlichen Verlauf haben.

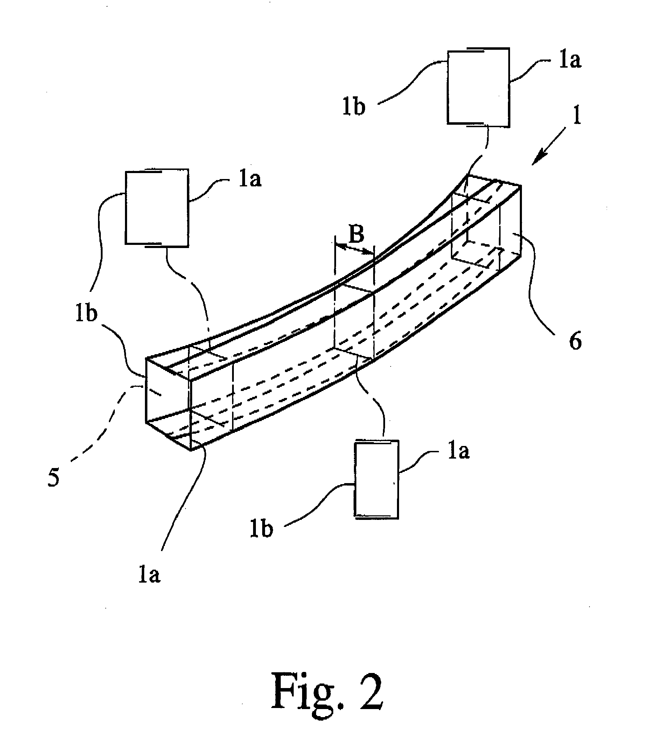

Das in Fig. 1 zum Stand der Technik und in Fig. 2 zur Erfindung dargestellte Beispiel zeigt, daß der hier gewünschte Verlauf der Breite B des Hohlprofils 1 über dessen Länge, also in Längsrichtung, hier dadurch erreicht worden ist, daß die innere Fläche 5 des Hohlprofils 1 einen stärker bogenförmigen Verlauf als die äußere Fläche 6 aufweist. Meist ist dieser bogenförmige Verlauf ein solcher, bei dem sich der Bogenradius dauernd ändert, also kein kreisbogenförmiger Verlauf. Der Begriff "stärker bogenförmig" meint also einen über den wesentlichen Teil der Länge des Hohlprofils 1 geringeren Bogenradius der Fläche 5 im Vergleich mit dem entsprechenden Bogenradius der äußeren Fläche 6.

Grundsätzlich wäre es auch möglich, eine der beiden Flächen 5, 6, insbesondere die äußere Fläche 6, gerade zu belassen.

Fig. 2, 3 und 4 beziehen sich insgesamt auf die Lehre der Erfindung. Diese betrifft generell einen Aufprallquerträger für eine Kraftfallrzeugkarosserie. Dabei kann es sich nicht nur um einen Stoßfängerquerträger, wie dargestellt, sondern z. B. um einen Seitenaufprallschutz oder um einen Instrumententafelträger handeln.

Für diesen Aufprallquerträger mit Hohlprofil 1 gilt generell, daß das Hohlprofil 1 aus zwei sich in Längsrichtung erstreckenden Teilprofilen 1a,b besteht, die aufeinanderzu gerichtet miteinander zusammengefügt und fest miteinander verbunden sind, wobei eines des Teilprofile 1b im Querschnitt im wesentlichen U-förmig und das andere Teilprofil 1a U-förmig oder geschlossen ausgeführt ist, wobei die die Abmessungen quer zur Längsrichtung, also in Querrichtung, also die Breite B des Hohlprofils 1 definierenden Flächen 5, 6 von den Teilprofilen 1a; 1b gebildet sind.

Fig. 2 zeigt dabei, daß in diesem Ausführungsbeispiel die Breite B des von den beiden U-förmigen Teilprofilen 1a, 1b gebildeten Hohlprofils 1 im mittleren Abschnitt 4 geringer ist als in den endseitigen Abschnitten 2, Das wird bei einem Seitenaufprallsclautz weniger häufig eingesetzt werden.

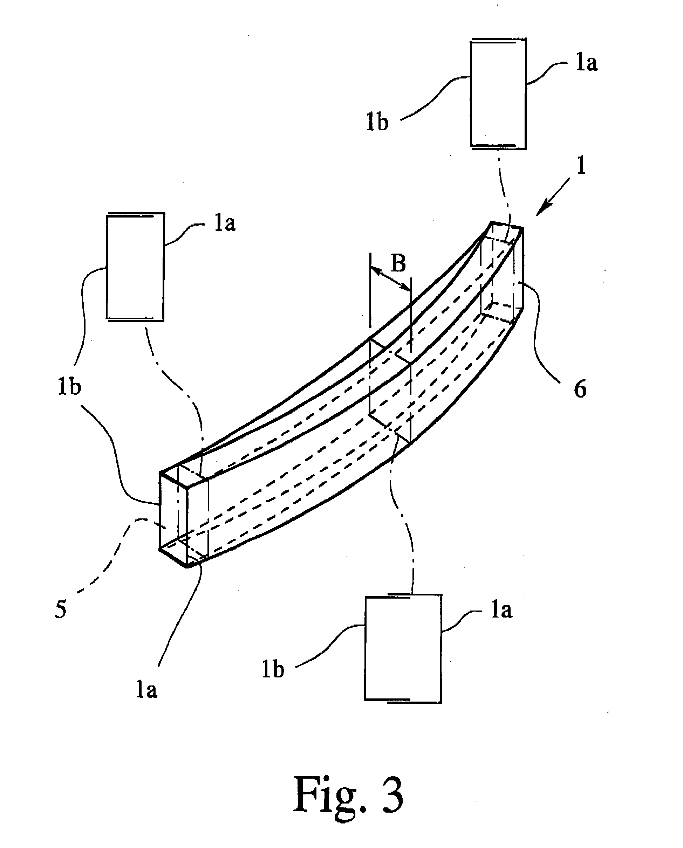

Dort kommt eher Fig. 3 zur Geltung, wo man erkennt, daß die Breite B des Hohlprofils 1, gebildet von den beiden Teilprofilen 1a, 1b, im mittleren Abschnitt 4 größer ist als in den endseitigen Abschnitten 2.

Bei dem in Fig. 2 dargestellten Ausführungsbeispiel ist vorgesehen, daß die beiden U-förmigen Teilprofile 1a; 1b an ihren Schenkeln miteinander verbunden sind.

Von besonderem Vorzug ist eine Ausführungsform, bei der vorgesehen ist, daß ein Teilprofil 1a; 1b bzw. jedes Teilprofil 1a,b als Rollprofil oder Walzprofil aus Metall-Flachbandmaterial ausgeführt ist. Grundsätzlich wäre auch ein Stanzteil ganz zweckmäßig, aber auch teurer. Insbesondere in Frage kommt Stahlblech, insbesondere ultra-hochfestes Stahlblech. Dafür darf insgesamt verwiesen werden auf die Literaturstellen "Innovate! 1/05", Seiten 8 bis 13, herausgebracht von ThyssenKrupp im Januar 2005, und "Max Planck Forschung 3/2004", Seiten 36 bis 41 herausgebracht von Max Planck, ThyssenKrupp Stahl "Umformverhalten höher- und höchstfester Mehrphasenstähle". Auf die Ausführungen in diesen Literaturstellen darf zur Ergänzung der Offenbarung der vorliegenden Anmeldung ausdrücklich hingewiesen werden.

Es gibt keine allgemeingültige Definition von hochfesten und ultra-hochfesten Stählen. Jedenfalls sind Zugfestigkeiten von mehr als 600 MPa, vorzugsweise mehr als 800 MPa für ultra-hochfeste Stähle anzustreben und erreichbar.

Grundsätzlich ist die Lehre der Erfindung auch anwendbar, wenn Aluminiumblech verwendet wird, das natürlich in entsprechend angepaßter Weise verarbeitet werden muß. Auch eine Mischung verschiedener Materialien ist denkbar, jedenfalls die Verwendung unterschiedlicher Materialien für die beiden Teilprofile 1a; 1b. Handelt es sich bei den Teilprofilen 1a; 1b um Profile aus demselben Material oder miteinander schweißbaren unterschiedlichen Materialien, so empfiehlt es sich, diese Teilprofile 1a; 1b durch Schweißen miteinander zu verbinden. Grundsätzlich sind andere Fügeverbindungen, und zwar materialschlüssige wie formschlüssige Fügeverbindungen ebenso realisierbar, wenn das die praktischen Anforderungen für das konkrete Produkt erlauben.

Im Prinzip sind auch Stanzteile einsetzbar, Rollprofile aus Metall-Flachbandmaterial, insbesondere aus hochfestem Stahlblech, sind aber erste Wahl. Grundsätzlich ist es schließlich auch möglich, daß ein Teilprofil 1a; 1b bzw. jedes Teilprofil 1a,b aus thermoplastischem Kunststoff, insbesondere faserverstärktem thermoplastischem Kunststoff, besteht.

In Fig. 2 sind die unterschiedlichen Breiten B des aus den beiden Teilprofilen 1a, 1b zusammengesetzten Hohlprofils 1 an den entsprechenden Schnittstellen eingezeichnet.

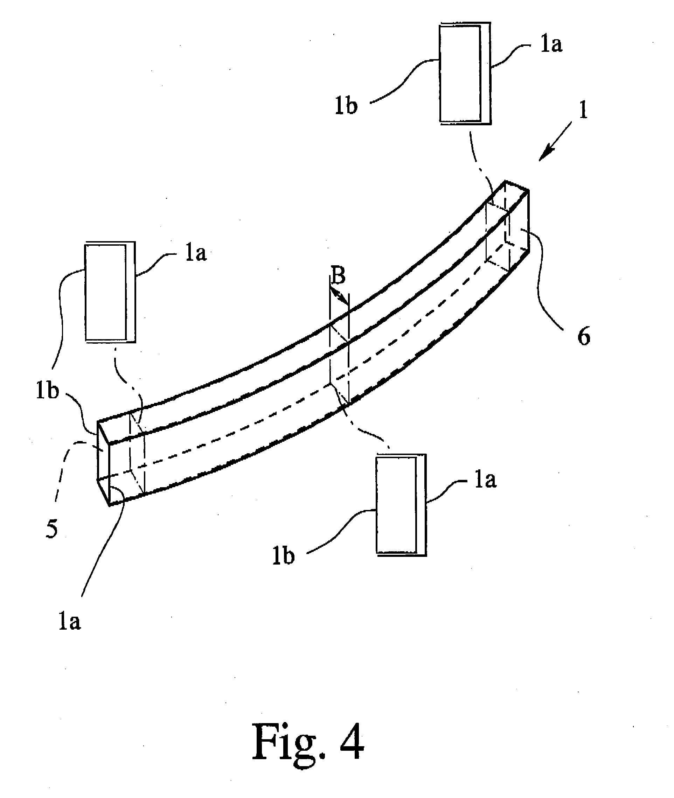

Interessant ist Fig. 4 insoweit als sich daraus ergibt, daß man das Konzept der Lehre auch bei einem Aufprallquerträger realisieren kann, bei dem das Hohlprofil 1 eine in Längsrichtung gleichmäßige Breite B aufweist, so daß die Breite B im mittleren Abschnitt 4 genau so groß ist wie in den endseitigen Abschnitten 2. Ungeachtet dessen ist auch hier der Aufprallquerträger aus zwei Teilprofilen 1a, 1b aufgebaut, die genau so zusammengefügt sind, wie das weiter oben mehrfach erläutert worden ist. Die Besonderheit bei Fig. 4 besteht allerdings darin, daß nur ein Teilprofil 1b hier offen und U-förmig ausgeführt ist, während das andere Teilprofil 1a kastenförmig geschlossen ausgeführt ist.

Besonders bevorzugt ist die Kombination von zwei Teilprofilen 1a, 1b, die jeweils U-förmig ausgeführt und aufeinanderzu gerichtet zusammengesetzt werden. Diese beiden Teilprofile 1a, 1b, können einen unterschiedlich bogenförmigen Verlauf haben, so daß die resultierenden Flächen 5, 6 des Hohlprofils 1 dann die gewünschte unterschiedliche Breite B über die Länge des Hohlprofils 1 realisieren.

Diese offenen, U-förmigen Teilprofile 1a, 1b lassen sich nach besonders bevorzugter Lehre aus Metall-Flachbandmaterial, insbesondere aus ultra-hochfestem Stahlblech, im Rollformverfahren oder Walzformverfahren kostengünstig und mit geringem Gewicht herstellen Sie ergeben einen vorzüglichen Verlauf des Widerstandsmoments des Aufprallquerträgers über die Länge des Hohlprofils 1.

Bei einem in der Praxis realisierten Beispiel ergibt sich durch Verwendung des erfindungsgemäßen Aufprallquerträgers als Stoßfängerquerträger aus Stahl eine Einsparung von mehr als 1 kg Stahl, nämlich eine Reduktion von 8,2 kg auf 7,1 kg. Bei einer Länge von etwa 1.400 mm und einer Höhe von etwa 120 bis 140 mm ergibt sich eine Breite zwischen 50 und 70 mm für den Stoßfängerquerträger. Die Wandstärke des verwendeten Stahlblechs im fertigen Zustand beträgt 1,4 bis 1,5 mm, Bei entsprechendem Einsatz von Aluminiumblech lägen die Wandstärken um 3,0 mm.

## Patentansprüche

1. Aufprallquerträger für eine Kraftfahrzeugkarosserie, insbesondere Stoßfängerquerträger oder Seitenaufprallschutz,
in Form eines langgestreckten, durchlaufenden, vorzugsweise leicht gebogen verlaufenden Hohlprofils (1), das eine Längsrichtung definiert,
**dadurch gekennzeichnet,**
**daß** das Hohlprofil (1) aus zwei sich in Längsrichtung erstreckenden Teilprofilen (1a,b) besteht, die aufeinanderzu gerichtet miteinander zusammengefügt und fest miteinander verbunden sind,
wobei eines des Teilprofile (1b) im Querschnitt im wesentlichen U-förmig und das andere Teilprofil (1a) U-förmig oder geschlossen ausgeführt ist,
wobei die die Abmessungen quer zur Längsrichtung, also in Querrichtung, also die Breite (B) des Hohlprofils (1) definierenden Flächen (5, 6) von den Teilprofilen (1a; 1b) gebildet sind.

2. Aufprallquerträger nach Anspruch 1, **dadurch gekennzeichnet, daß** das Hohlprofil (1) in Querrichtung gesehen in seinen endseitigen Abschnitten (2) einerseits und dem dazwischen liegenden mittleren Abschnitt (4) andererseits eine unterschiedliche Breite (B) aufweist, die **dadurch** realisiert ist, daß die von den Teilprofilen (1a, 1b) gebildeten Flächen (5, 6) einen unterschiedlichen bogenförmigen Verlauf aufweisen.

3. Aufprallträger nach Anspruch 2, **dadurch gekennzeichnet, daß** die Breite (B) im mittleren Abschnitt (4) geringer ist als in den endseitigen Abschnitten (2),
wobei, vorzugsweise, die Breite (B) des Hohlprofils (1) im mittleren Abschnitt (4) um etwa 10 % bis etwa 30 % geringer ist als in den endseitigen Abschnitten (2).

4. Aufprallquerträger nach einem der Ansprüche 1 bis 3, **dadurch gekennzeichnet,**
**daß** die beiden die Breite (B) definierenden Flächen (5, 6) des Hohlprofils (1) einen kontinuierlichen Verlauf haben,
wobei, vorzugsweise (für Anspruch 3), die innere Fläche (5) einen stärker bogenförmigen Verlauf als die äußere Fläche (6) aufweist und ggf. eine der beiden Flächen (5, 6), insbesondere die äußere Fläche (6) gerade ist.

5. Aufprallquerträger nach einem der Ansprüche 1 bis 4, **dadurch gekennzeichnet,**
**daß** die beiden U-förmigen Teilprofile (1a, 1b) an ihren Schenkeln miteinander verbunden sind oder das U-förmige Teilprofil (1b) mit dem geschlossenen Teilprofil (1a) an seinen Schenkeln fest verbunden ist.

6. Aufprallquerträger nach einem der Ansprüche 1 bis 5, **dadurch gekennzeichnet,**
**daß** ein Teilprofil (1a; 1b) oder jedes Teilprofil (1a,b) als Rollprofil oder Walzprofil oder als Stanzteil aus Metall-Flachbandmaterial ausgeführt ist,
wobei, vorzugsweise, die Teilprofile (1a, b) des Hohlprofils (1) durch Schweißen miteinander verbunden sind.

7. Aufprallquerträger nach Anspruch 6, **dadurch gekennzeichnet,**
**daß** ein Teilprofil (1a; 1b) oder jedes Teilprofil (1a,b) aus Stahlblech, insbesondere ultra-hochfestem Stahlblech, besteht oder
**daß** ein Teilprofil (1a; 1b) oder jedes Teilprofil (1a,b) aus Aluminiumblech besteht.

8. Aufprallquerträger nach einem der Ansprüche 1 bis 5, **dadurch gekennzeichnet,**
**daß** ein Teilprofil (1a; 1b) oder jedes Teilprofil (1a,b) aus thermoplastischem Kunststoff, insbesondere faserverstärktem thermoplastischem Kunststoff, besteht.

9. Aufprallquerträger nach einem der Ansprüche 1 bis 8, **dadurch gekennzeichnet,**
**daß** er als Stoßfängerquerträger ausgeführt ist und daß dazu das Hohlprofil (1) vom einen zum anderen Ende des Stoßfängerquerträgers durchläuft und in endseitigen Abschnitten (2) zur Anbringung an sich im wesentlichen quer zur Längsrichtung, also in Querrichtung, erstreckenden Aufpralldämpfern (3) bestimmt und geeignet ist.
